# EUROPÄISCHE PATENTSCHRIFT

(11) **EP 0 681 520 B1**
(45) Veröffentlichungstag und Bekanntmachung des Hinweises auf die Patenterteilung: **04.12.1996**
(21) Anmeldenummer: 94904914.2
(22) Anmeldetag: 01.02.1994
(51) Int. Cl.: B29C 45/17, B29C 45/67

(54) **SPRITZGIESSMASCHINE**
INJECTION MOULDING MACHINE
MACHINE DE MOULAGE PAR INJECTION

(30) Priorität: 01.02.1993 AT 165/93
(43) Veröffentlichungstag der Anmeldung: 15.11.1995
(73) Patentinhaber: SVOBODA, Bruno, A-1070 Wien (AT)
(72) Erfinder: SVOBODA, Bruno, A-1070 Wien (AT)
(74) Vertreter: Gibler, Ferdinand, Dipl.Ing. Dr. techn.
(86) Internationale Anmeldenummer: AT9400010
(87) Internationale Veröffentlichungsnummer: WO9417977

(56) Entgegenhaltungen:
- DE-A- 2 431 585
- DE-A- 2 528 153
- DE-B- 1 109 356
- DE-B- 1 159 137
- DE-U- 9 212 480
- FR-A- 1 595 056
- PATENT ABSTRACTS OF JAPAN vol. 8, no. 284 (M-348) 26. Dezember 1984 & JP,A,59 152 832 (YAMASHIRO SEIKI SEISAKUSHO) 31. August 1984 siehe Zusammenfassung
- PATENT ABSTRACTS OF JAPAN vol. 7, no. 68 (M-201) 19. März 1983 & JP,A,57 209 799 (NITSUSEI JIYUSHI KOGYO) 23. Dezember 1982 siehe Zusammenfassung

## Beschreibung

Die Erfindung betrifft eine Spritzgießmaschine mit einem Doppel C-förmigen Maschinenrahmen und je einer ortsfesten sowie hydraulisch oder elektromechanisch bewegbaren Formaufspannplatte, wobei zur weitgehenden Kompensation des beim Formschluß auftretenden, den Maschinenrahmen verformenden Biegemomentes neben einem die bewegbare Formaufspannplatte betätigenden antreibbaren Kraftorgan, vorzugsweise einem Hydraulikzylinder, wenigstens ein weiteres antreibbares Kraftorgan in kraftsymmetrischer Anordnung zu ersterem vorgesehen ist, das gleichzeitig mit einer der von dem ersten Kraftorgan bewirkten Schließkraft entsprechenden bzw. proportionalen Kraft beaufschlagt wird.

Solche Spritzgießmaschinen sind allgemein bekannt. Die Formaufspannplatten dieser bekannten Maschinen sind zur Aufnahme der beim Spritzvorgang auftretenden Axialkräfte durch Holme miteinander verbunden, wobei gegebenenfalls der bewegbare Formträger auf diesen Holmen verschiebbar gelagert ist.

Aus der DE-AS-1109 356 ist eine Spritzgießmaschine mit einem mehrteiligen Rahmen bekannt geworden, welcher zwei massiv gegossene Querhäupter aufweist, die durch mehrere in Formschließrichtung verlaufende Längsholme, die der Aufnahme der Formschließkräfte dienen, miteinander verbunden sind. Die Längsholme sind dabei in einem mittleren Bereich der Querhäupter angeordnet, während außerhalb dieses Mittelbereiches auf der einen Seite eine ortsfeste sowie eine über ein erstes Kraftorgan hydraulisch bewegbare Formaufspannplatte und auf der anderen Seite ein weiteres hydraulisch antreibbares Kraftorgan in kraftsymmetrischer Anordnung zum Ausgleich der vom ersten Kraftorgan auf die Längsholme ausgeübten Biegemomente angeordnet ist.

Weiters offenbart die DE-A1-25 28 153 eine Einständerpresse mit einem oberen und einem unteren Rahmen in Form von Armen, die an einem vertikalen Säulenrahmen befestigt sind und zwischen denen eine ortsfeste und eine von einem ersten Kraftorgan bewegbare Aufspannplatte angeordnet sind. Zur Kompensation von den mehrteiligen Rahmen verformenden Biegemomenten ist ein weiteres Kraftorgan in kraftsymmetrischer Anordnung vorgesehen, das gleichzeitig mit dem ersten Kraftorgan beaufschlagbar ist.

Die DE-U1-92 12 480 hat eine Spritzgießmaschine mit einen einteiligen Rahmen zum Gegenstand, welcher eine feststehende und eine über ein Kraftorgan bewegbare Formaufspannplatte trägt, die quer zur Achsrichtung der aufgeprägten Kraft drehbar gelagert sind. Durch die dadurch erreichbare Kippfähigkeit der Formaufspannplatten ist sichergestellt, daß sich diese auch bei hoher Schließkraft immer parallel ausrichten.

Weiters ist aus der JP 57209799 (Patents Abstracts of Japan Vol.7, No. 68) eine Verformungsmaschine bekannt geworden, bei der zwei Querschenkel über Schraubverbindungen mit je einem Ende eines Längsschenkels verbunden und zwischen den Querschenkeln eine Formschließeinrichtung und ein Ausgleichszylinder vorgesehen sind, die bezüglich des Längsschenkels kraftsymmetrisch angeordnet sind, so daß die von den beiden Zylindern ausgeübten Drehmomente sich kompensieren.

Es ist Aufgabe der Erfindung, eine Spritzgießmaschine der eingangs erwähnten Art zu schaffen, bei der eine weitgehende Parallelität der Formaufspannplatten während des Formschlusses gewährleistet ist.

Eine weitere Aufgabe der Erfindung ist es, bei Doppel C-förmigen Maschinenrahmen eine Verbiegung des Doppel C-Längsschenkels überhaupt zu verhindern.

Die Erfindung löst diese Aufgabe dadurch, daß der Langsschenkel des Doppel C-förmigen Maschinenrahmens mit den Querschenkeln desselben einstückig ausgebildet ist.

Durch diese Ausbildung können die üblicherweise die Axialkräfte abfangenden Holme entfallen, wobei durch die Anordnung weiterer Kraftorgane, insbesondere am Rahmen angreifende Hydraulikzylinder die Summe der auf den Rahmen einwirkenden Kräfte und Biegemomente auf Null und der Rahmen daher verwindungsfrei gehalten werden kann. Dies insbesondere deshalb, weil das durch die Schließkraft verursachte Biegemoment, insbesondere in Rahmen-Längsrichtung, durch zumindest die eine weitere zur Schließkraft in Gleichgewicht stehende Kraft kompensiert werden kann.

Nach einer Weiterbildung der Erfindung sind sämtliche Hydraulikzylinder am Maschinenrahmen angeordnet und mit vorzugsweise zueinander parallel liegenden Achsen versehen, wodurch trotz offen zugänglicher Formschließeinheit ein verspannungsfreier Maschinenrahmen garantiert ist.

Nach einer Weiterbildung der Erfindung sind die Hydraulikzylinder an der Innenseite eines Schenkels, insbesondere Längsschenkels des Doppel C-förmigen Rahmens angeordnet und arbeiten richtungsgleich.

Gemäß einer anderen Ausführungsform haben der die bewegbare Formaufspannplatte betätigende und der weitere Hydraulikzylinder unterschiedliche Arbeitsrichtungen.

Nach anderen Weiterbildungen der Erfindung können sämtliche Hydraulikzylinder von einer gemeinsamen Speiseeinrichtung oder auch von unterschiedlichen Speiseeinrichtungen beaufschlagt werden.

Es ist auch denkbar, die Spritzgießmaschine erfindungsgemäß derart weiterzubilden, daß die ortsfeste Formaufspannplatte mit einer am ihr gegenüberliegenden Schenkel angeordneten weiteren Platte verbunden ist und daß die beiden Platten mit den jeweils entsprechenden Schenkeln gelenkig verbunden sind.

Nach wieder einer anderen Weiterbildung der Erfindung kann auch vorgesehen sein, daß die Gelenke in Achsrichtung des die bewegbare Platte betätigenden Hydraulikzylinders liegen, daß die beiden gelenkig verbundenen Platten über einen weiteren Holm mitsammen verbunden sind und dieser als Führung für die bewegbare Formaufspannplatte dient.

Die Spritzgießmaschine ist in einer bevorzugten Ausführungsform insbesonders auch dadurch gekennzeichnet, daß die beiden gelenkig verbundenen Platten der weitere Holm, die bewegbare Formaufspannplatte und der sie betätigende Hydraulikzylinder ein zusammenhängendes Schließgestell bilden.

Die Erfindung wird nun anhand von Ausführungsbeispielen unter Zuhilfenahme der angeschlossenen Zeichnungen näher beschrieben.

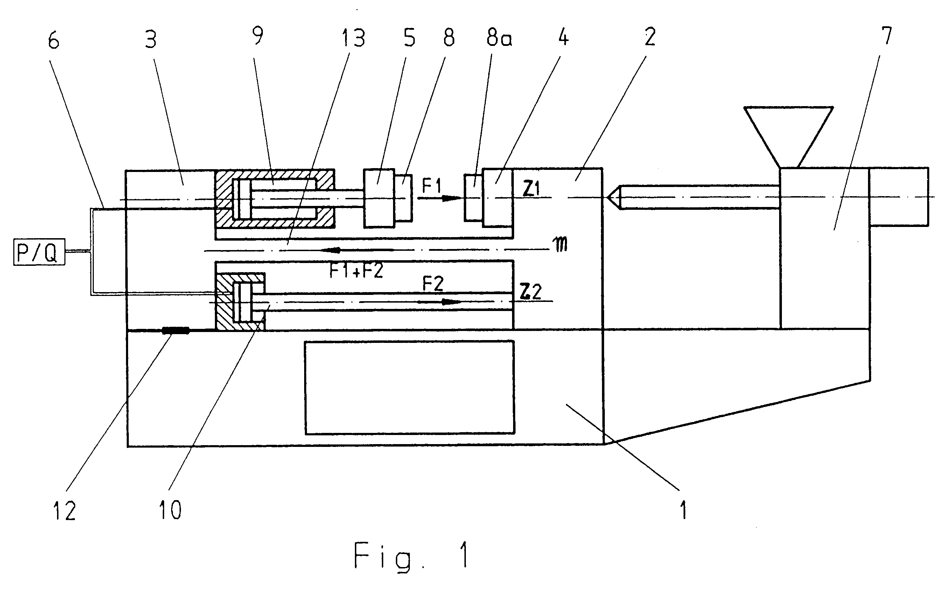

Es zeigen Fig.1, 2 und 3 verschiedene Ausführungsformen der erfindungsgemäßen Spritzgießmaschine, wobei vergleichbare Teile jeweils mit denselben Bezugsziffern bezeichnet sind.

Fig.1 zeigt eine Ausführung mit Doppel C-förmigem Rahmen, wobei auf einem Sockel 1 zwei Schenkel 2,3 angeordnet sind, wobei der Schenkel 2 die feste Formaufspannplatte 4 und der andere Schenkel 3 die bewegbare Formaufspannplatte 5 aufnimmt. Der Sockel 1 trägt weiters eine die Spritzmasse zuführende Spritzeinheit. Die Formaufspannplatten 4,5 tragen die Formhälften 8,8a.

Die bewegbare Formaufspannplatte 5 ist mit einem als Schließmechanik dienenden Hydraulikzylinder 9 zu deren Bewegung und zur Erzeugung der Preßkraft verbunden, der an der einen Seite des Holms 13, d.i. der Doppel C-Längsschenkel, parallel zu diesem angeordnet ist. Weiters ist zwischen den beiden Schenkeln 2,3 ein weiterer Hydraulikzylinder 10 vorgesehen, der auf der anderen Seite des Holms 13 gleichfalls zu diesem parallel angeordnet ist. Die Hydraulikzylinder 9,10 sind von einer gemeinsamen Hydraulikleitung 6 beaufschlagt, und wirken in entgegengesetzten Richtungen.

Die Anordnung der weiteren Hydraulikzylinder 10 ist somit kraftsymmetrisch, sodaß das bei Beaufschlagung des Hydraulikzylinders 9 entstehende Moment kompensiert wird und die Summe aller Momente gleich Null ist.

Um erfindungsgemäß die Gleichung: Summe aller im Maschinenrahmen wirkender Kräfte sowie Momente gleich Null, in diesem System zu erfüllen, muß bei ungleichem Abstand der Zylinderachsen Z1, Z2 von der Mittelachse m, entweder die Kolbenfläche der Zylinder 9,10 verschieden groß ausgeführt sein, oder in einer Zylinderleitung ein den Druck reduzierendes Element eingesetzt werden, oder aber einer der beiden Zylinder mit einem eigenen unabhängigen Druckversorgungssystem angespeist werden. Jedenfalls wird erreicht, daß im Holm 13 reine Zugkräfte wirken und dieser nicht mit Momenten belastet ist, was seinerseits erreicht wird durch die entsprechende Abstimmung der vom Zylinder 10 ausgeübten Kraft auf jene vom Zylinder 9 erzeugte Schließkraft.

Der Schenkel 2 ist mit dem Sockel 1 fest verbunden, wohingegen der Schenkel 3 mit dem Sockel über bspw. eine Nut-Stift-Kombination 12 axial bewegbar verbunden ist, um gegebenenfalls einer Dehnung des Holms 13 ausweichen zu können. Vorzugsweise ist die Nut durch ein Langloch realisiert.

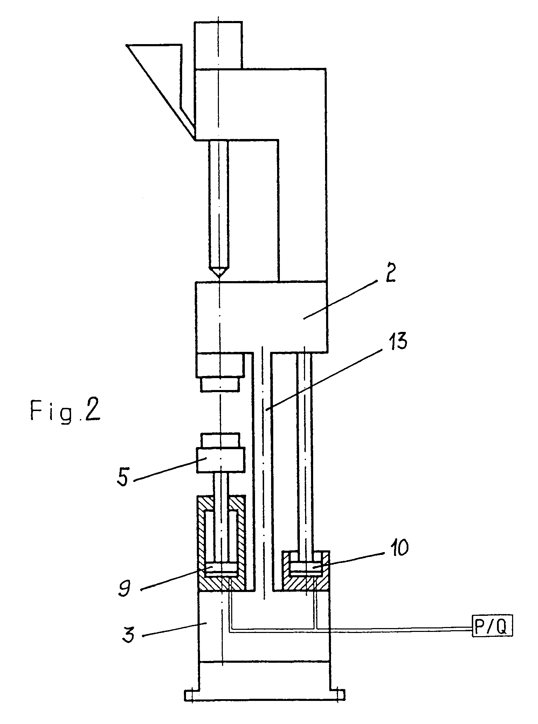

Fig. 2 zeigt eine der Fig.1 entsprechende Anordnung der Spritzgußmaschine in vertikaler Anordnung.

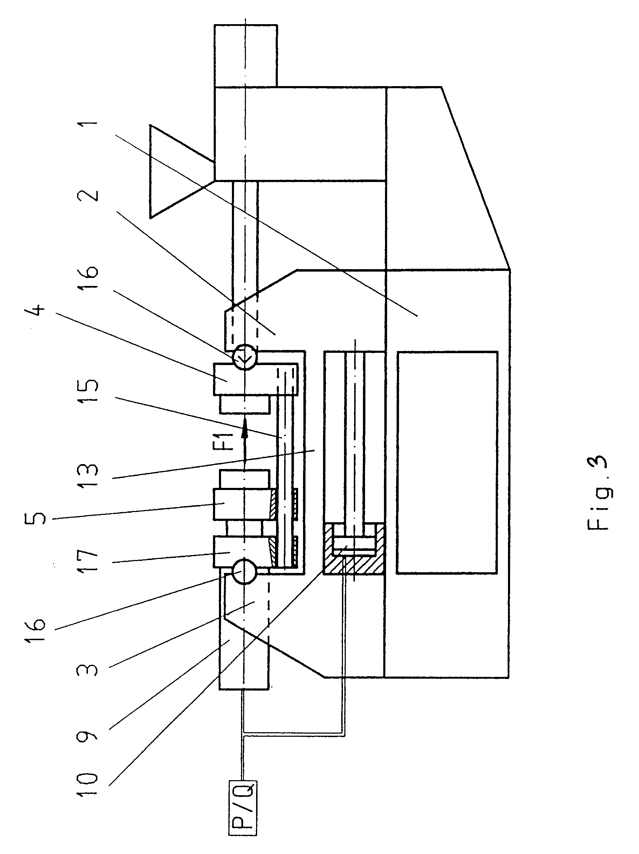

Eine weitere Ausführungsform ist in Fig.3 dargestellt. Bei dieser Variante ist zusätzlich zur ortsfesten Aufspannplatte 4 eine weitere Platte 17 vorgesehen, wobei jede dieser Platten über ein in der Achse des Hydraulikzylinders 9 und somit in der Wirkachse der Schließkraft F1 angeordnetes Gelenk 16 mit dem entsprechenden Schenkel 2,3 verbunden ist. Die ortsfesten Platten 4,17 sind mitsammen über einen weiteren Holm 15 verbunden. Die vom Hydraulikzylinder 9 bewegbare Formaufspannplatte 5 gleitet entlang des weiteren Holm 15 und verwendet diesen als Führung.

Durch diese Ausbildung erfolgt eine Entkopplung des durch die Platten 4,5,17, den weiteren Holm 14 und den Hydraulikzylinder 9 gebildeten Schließgestelles vom Rahmen, wodurch insbesondere beim Formschluß eine weitere Verbesserung des Erhaltes der Parallelität der Formaufspannplatten gewährleistet ist, auch wenn sich die Schenkel geringfügig aufweiten.

Wenngleich vorstehend die Erfindung anhand von Ausführungsbeispielen erläutert wurde, bei welchen zur Aufbringung der Gegenkraft ein hydraulisch arbeitendes Zylinder-Kolben-Aggregat 10 verwendet wurde, ist die Erfindung hierauf nicht beschränkt. Wesentlich ist, daß es sich um ein antreibbares Kraftorgan handelt, das gleichzeitig mit dem Schließzylinder 9 mit einer dem Schließdruck entsprechenden oder proportionalen Kraft betätigbar ist. So kann das Kraftorgan z.B. auch als elektrisch angetriebene Kugelumlaufspindel bzw. Gewindespindel ausgebildet sein.

## Patentansprüche

1. Spritzgießmaschine mit einem Doppel C-förmigen Maschinenrahmen (2, 3, 13) und je einer ortsfesten sowie hydraulisch oder elektromechanisch bewegbaren Formaufspannplatte (5), wobei zur weitgehenden Kompensation des beim Formschluß auftretenden, den Maschinenrahmen (2, 3, 13) verformenden Biegemomentes neben einem die bewegbare Formaufspannplatte (5) betätigenden antreibbaren Kraftorgan (9), vorzugsweise einem Hydraulikzylinder, wenigstens ein weiteres antreibbares Kraftorgan (10) in kraftsymmetrischer Anordnung zu ersterem vorgesehen ist, das gleichzeitig mit einer der von dem ersten Kraftorgan (9) bewirkten Schließkraft entsprechenden bzw. proportionalen Kraft beaufschlagt wird, **dadurch gekennzeichnet**, daß der Längsschenkel (13) des Doppel C-förmigen Maschinenrahmens (2, 3, 13) mit den Querschenkeln (2, 3) desselben einstückig ausgebildet ist.

2. Spritzgießmaschine nach Anspruch 1, **dadurch gekennzeichnet**, daß das wenigstens eine weitere antreibbare Kraftorgan (10) ein am Rahmen angreifender Hydraulikzylinder ist.

3. Spritzgießmaschine nach den Ansprüchen 1 und 2, **dadurch gekennzeichnet**, daß die Hydraulikzylinder (9,10,10',10'') am Maschinenrahmen angeordnet sind.

4. Spritzgießmaschine nach Anspruch 1, **dadurch gekennzeichnet**, daß sämtliche Hydraulikzylinder (9,10) zueinander parallel liegende Achsen aufweisen.

5. Spritzgießmaschine nach den Ansprüchen 1 und 2, **dadurch gekennzeichnet**, daß die Hydraulikzylinder an der Innenseite eines Schenkels (3) des Doppel C-förmig ausgebildeten Rahmens angeordnet sind und richtungsgleich arbeiten.

6. Spritzgießmaschine nach Anspruch 3, **dadurch gekennzeichnet**, daß der die bewegbare Formaufspannplatte betätigende und der weitere Hydraulikzylinder unterschiedliche Arbeitsrichtungen haben.

7. Spritzgießmaschine nach einem der vorhergehenden Ansprüche, **dadurch gekennzeichnet**, daß sämtliche Hydraulikzylinder von einer gemeinsamen Speiseeinrichtung beaufschlagt sind.

8. Spritzgießmaschine nach einem der vorhergehenden Ansprüche, **dadurch gekennzeichnet**, daß die Hydraulikzylinder von unterschiedlichen Speiseeinrichtungen beaufschlagt sind.

9. Spritzgießmaschine nach einem der vorhergehenden Ansprüche, **dadurch gekennzeichnet**, daß die ortsfeste Formaufspannplatte mit einer am ihr gegenüberliegenden Schenkel angeordneten weiteren Platte (17) verbunden ist, und daß die beiden Platten mit dem jeweils entsprechenden Schenkel (2,3) gelenkig verbunden sind (Fig.9).

10. Spritzgießmaschine nach Anspruch 9, **dadurch gekennzeichnet**, daß die Gelenke (16) in Achsrichtung des die bewegbare Platte betätigenden Hydraulikzylinders liegen.

11. Spritzgießmaschine nach den Ansprüchen 9 und 10, **dadurch gekennzeichnet**, daß die beiden gelenkig mit den Schenkeln verbundenen Platten über einen weiteren Holm (15) mitsammen verbunden sind und daß der weitere Holm als Führung für die bewegbare Formaufspannplatte dient.

12. Spritzgießmaschine nach den Ansprüchen 9 bis 11, **dadurch gekennzeichnet**, daß die beiden mit den Schenkeln gelenkig verbundenen Platten (4,17), der weitere Holm (15), die bewegbare Formaufspannplatte (5) und der sie betätigende Hydraulikzylinder (9) ein zusammenhängendes Schließgestell bilden.

## Claims

1. Injection-moulding machine having a double C-shaped machine frame (2, 3, 13) and in each case a stationary platen and a hydraulically or electro-mechanically movable platen (5), in which case in order substantially to compensate the bending moment occurring during closure of the mould and deforming the machine frame (2, 3, 13), in addition to a drivable force-exerting member (9), preferably a hydraulic cylinder, actuating the movable platen (5), at least one further drivable force-exerting member (10) is provided in an arrangement which is symmetrical with the first force-exerting member in terms of force, which further force-exerting member is simultaneously acted upon by a force which corresponds or is proportional to the closure force exerted by the first force-exerting member (9), characterized in that the longitudinal limb (13) of the double C-shaped machine frame (2, 3, 13) is designed integrally with the transverse limbs (2, 3) thereof

2. Injection-moulding machine according to Claim 1 characterized in that the at least one further drivable force-exerting member (10) is a hydraulic cylinder engaging on the frame.

3. Injection-moulding machine according to Claims 1 and 2, characterized in that the hydraulic cylinders (9,10,10',10'') are arranged on the machine frame.

4. Injection-moulding machine according to Claim 1, characterized in that all the hydraulic cylinders (9,10) have axes which lie parallel to one another.

5. Injection-moulding machine according to Claims 1 and 2, characterized in that the hydraulic cylinders are arranged on the inside of one limb (3) of the frame which is of double C-shaped design and operate in the same direction.

6. Injection-moulding machine according to Claim 3, characterized in that the hydraulic cylinder actuating the movable platen and the further hydraulic cylinder have different operating directions.

7. Injection-moulding machine according to one of the preceding claims, characterized in that all the hydraulic cylinders are acted upon by a common feed device.

8. Injection-moulding machine according to one of the preceding claims, characterized in that the hydraulic cylinders are acted upon by different feed devices.

9. Injection-moulding machine according to one of the preceding claims, characterized in that the fixed platen is connected to a further platen (17) arranged on the limb lying opposite it, and in that the two platens are connected in an articulated manner to the respectively corresponding limb (2,3) (Fig. 3).

10. Injection-moulding machine according to Claim 9, characterized in that the joints (16) lie in the axial direction of the hydraulic cylinder actuating the movable platen.

11. Injection-moulding machine according to Claims 9 and 10, characterized in that the two platens which are connected in an articulated manner to the limbs are connected to one another via a further crossbeam (15), and in that the further crossbeam serves as a guide for the movable platen.

12. Injection-moulding machine according to Claims 9 to 11, characterized in that the two platens (4, 17) which are connected to the limbs in an articulated manner, the further crossbeam (15), the movable platen (5) and the hydraulic cylinder (9) actuating the latter form a coherent closure framework.

## Revendications

1. Machine à mouler par injection équipée d'un bâti double (2, 3, 13) en forme de C et d'une plaque de bridage de moule (5) localement fixe ainsi que d'une plaque de bridage de moule déplaçable hydrauliquement ou électromécaniquement, dans laquelle, pour effectuer une compensation notable du couple de flexion se manifestant lors de la jonction des moules et déformant le bâti de machine (2, 3, 13), est prévu, outre un organe d'application de force (9) susceptible d'être entraîné et actionnant la plaque de bridage de moule (5) déplaçable, de préférence un vérin hydraulique, au moins un autre organe d'application de force (10) suseptible d'être entraîné, disposé en répondant à une symétrie par rapport au premier quand à l'application de la force, qui applique simultanément une force correspondante, ou proportionnelle, à la force de fermeture provoquée par le premier organe d'application de force (9), caractérisée par le fait que la branche longitudinale (13) du bâti de machine double (2, 3, 13) en forme de C est réalisée d'un seul tenant avec les branches transversales (2, 3) de celui-ci.

2. Machine à mouler par injection selon la revendication 1, caractérisée par le fait que le au moins un autre organe d'application de force (10) pouvant être entraîné est un vérin hydraulique agissant sur le bâti.

3. Machine à mouler par injection selon les revendications 1 et 2, caractérisée par le fait que les vérins hydrauliques (9, 10, 10', 10'') sont disposés sur le bâti de machine.

4. Machine à mouler par injection selon la revendication 1, caractérisée par le fait que l'ensemble des vérins hydrauliques (9, 10) présentent des axes parallèles entre eux.

5. Machine à mouler par injection selon les revendications 1 et 2, caractérisée par le fait que les vérins hydrauliques sont disposés sur le côté intérieur d'une branche (3) du cadre double à forme en C et travaillent dans le même sens.

6. Machine à mouler par injection selon la revendication 3, caractérisée par le fait que le vérin hydraulique actionnant la plaque de bridage de moule déplaçable et l'autre vérin hydraulique ont des directions de travail différentes.

7. Machine à mouler par injection selon l'une des revendications précédentes, caractérisée par le fait que l'ensemble des vérins hydrauliques est alimenté par un dispositif d'alimentation commun.

8. Machine à mouler par injection selon l'une des revendications 1 à 6, caractérisée par le fait que les vérins hydrauliques sont alimentés par des dispositifs d'alimentation différentes.

9. Machine à mouler par injection, selon l'une des revendications précédentes, caractérisée par le fait que la plaque de bridage de moule localement fixe est reliée à une plaque (17) supplémentaire disposée sur la branche qui lui est opposée et que les deux plaques sont reliées de façon articulée aux branches (2, 3) correspondantes respectives (figure 9).

10. Machine à mouler par injection, selon la revendication 9, caractérisée par le fait que les articulations (16) sont situées dans la direction axiale du vérin hydraulique actionnant la plaque déplaçable.

11. Machine à mouler par injection, selon les revendications 9 et 10, caractérisée par le fait que les deux plaques reliées de façon articulée aux branches sont reliées ensemble par l'intermédiaire d'un montant (15) supplémentaire et que le montant supplémentaire sert de guidage pour la plaque de bridage de moule déplaçable.

12. Machine à mouler par injection, selon les revendications 9 à 11, caractérisée par le fait que les deux plaques (4, 17) reliées de façon articulée aux branches, le montant (15) supplémentaire, la plaque de bridage de moule (5) déplaçable et le vérin hydraulique (9) les actionnant constituent un bâti de fermeture cohérent.
